# EUROPEAN PATENT APPLICATION

(11) **EP 1 901 171 A1**
(43) Date of publication of application: **19.03.2008**
(21) Application number: 07115637.6
(22) Date of filing: 04.09.2007
(51) Int. Cl.: G06F 12/08

(54) **Apparatus and method for handling interrupt disabled section and page pinning apparatus and method**

(30) Priority: 15.09.2006 KR 20060089803
(71) Applicant: Samsung Electronics Co., Ltd., Suwon-si Gyeonggi-do 443-742 (KR)
(72) Inventor: Kim, Hyo-Jun, Gyeonggi-do (KR)
(74) Representative: Brandon, Paul Laurence

(57) **Abstract**

An apparatus and method for handling an interrupt disabled section and page pinning apparatus and method are provided. An apparatus (100) for handling an interrupt disabled section includes: a generating unit (110) which generates a list of interrupt disabled sections, in which demand paging can occur, in order to execute a program; an examining unit (120) which searches the generated list when the program demands to disable an interrupt and examines whether information corresponding to the interrupt disabling demand is included in the list; and a loading unit (130) which reads out a page required to execute the program from an auxiliary storage device when the information corresponding to the interrupt disabling demand is included in the list, and loads the page into a physical memory.

## Description

### BACKGROUND OF THE INVENTION

### 1. Field of the Invention

Apparatuses and methods consistent with the present invention relate to handling an interrupt disabled section and page pinning.

### 2. Description of the Related Art

When a computer program is created, the created program is physically divided into pages, which are allocated to and loaded into frames (division units) of a physical memory. Then, the program may be executed by a central processing unit (CPU). In this case, in order to execute the program, only the required pages need to be loaded into the physical memory. Therefore, even though the available memory space of the physical memory is small, the program can be executed. When there is insufficient available memory space of the physical memory (frames), a paging method capable of using a space of a hard disk as a physical memory, that is, demand paging, can be used.

Demand paging is a method of allocating a virtual memory to an auxiliary storage device, such as a hard disk, in an operating system and mapping a physical memory to the virtual memory according to a user's demand so as to more effectively use the limited physical memory. According to demand paging, when a page necessary to execute a program has not been loaded into the physical memory, the corresponding page is read out from the virtual memory and is loaded into the physical memory by the program.

The virtual memory is swapped or mapped on a page basis, and a page has various sizes depending on a CPU and an operating system. Also, to compensate for the lack of the physical memory, the virtual memory stores, for example, an Internet paging file or a program file using a space of an auxiliary storage device (for example, a hard disk).

Meanwhile, since demand paging has a very high cache hitting rate, a reduction in speed is rarely felt by a user. For this reason, demand paging is used in most operating systems. As the amount of data and codes necessary to execute a program increase, demand paging is essentially used in a general-purpose operating system, such as Linux or Windows. However, since demand paging has a complicated mechanism, most built-in systems do not support a demand paging function.

When the built-in systems mainly using an RTOS (real-time multitasking operating system) attempt to support demand paging, interrupt disabled section handling becomes a problem. A concept of interrupt will now be briefly introduced citing an example. When a CPU performing a task for an arbitrary hardware apparatus "A" receives a task demand from a hardware apparatus "B" having a priority higher than the hardware apparatus "A", the CPU temporarily stops the task for the hardware apparatus "A" being performed and performs the task for the hardware apparatus "B" having transmitted the task demand. In this case, the CPU performs only one task for one hardware apparatus, but the process time is very short, which makes a user feel as the tasks for the hardware apparatuses "A" and "B" are simultaneously performed. The task demand of the hardware apparatus "B" is referred to as an interrupt.

The above-mentioned interrupt disabled section means a section beginning at a time point when an interrupt is disabled and ending at a time point immediately before the interrupt is enabled. An interrupt disabling method is used for the purpose of, for example, resource protection and critical section protection when multiple tasks are performed in parallel in a task-based system, such as RTOS. However, the interrupt disabling method may have a great effect on the system. For this reason, in general-purpose operating systems, such as Windows, Unix, and Linux, a user program is not authorized to disable an interrupt.

Further, in demand paging used in an RTOS-based system, if the interrupt disabling method is also used, demand paging occurs in a state in which an interrupt of an external object is disabled. That is, loading of a page not existing in a physical memory from a virtual memory into the physical memory may occur, whereby the system may not receive any interrupt for a section longer than a section intended by a first developer. Such a latency effect of the interrupt disabled section may be very serious in some cases, and thus a measure therefor is required.

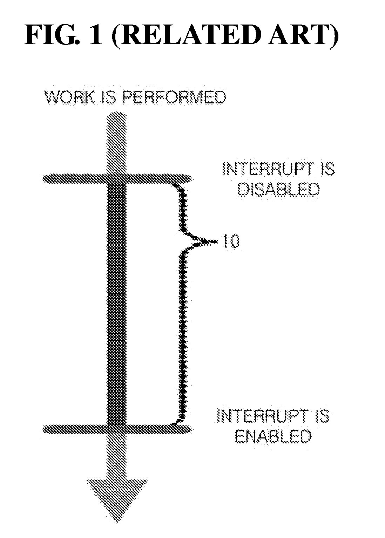

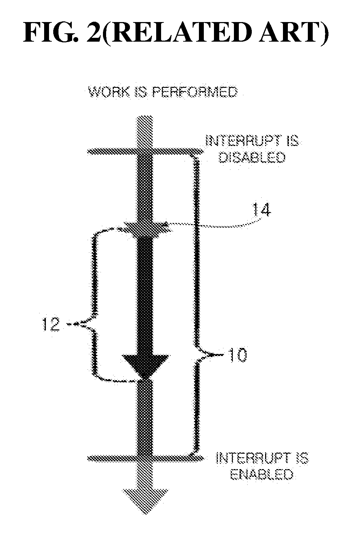

FIGS. 1 and 2 are views illustrating the concepts of an interrupt disabled section and an interrupt latency time in the related art.

Most of the built-in systems allow a program to disable/enable an interrupt. An interrupt disabling/enabling method is widely used for avoiding problems that may occur when a plurality of tasks simultaneously performed in a multi-task environment access a shared resource at the same time.

In the case of disabling an interrupt, an operating system cannot take a CPU usage authority from a program and thus the program can monopolize the CPU until the interrupt is enabled. However, disabling the interrupt for a long time may affect the flow of the whole system. For this reason, the interrupt is generally disabled for as short a time as possible and the interrupt is rapidly enabled.

As illustrated in FIG. 1, in an interrupt disabled section 10 from a time point when an interrupt is disabled to a time point immediately before the interrupt is enabled, since a process on an external interrupt (demand) is put off, an interrupt latency time is caused by the time during which the process on interrupt is put off.

For example, in the interrupt disabled section 10, when a page fault 14 occurs, the interrupt disabled section 10, that is, an interrupt latency time, increases, as illustrated in FIG. 2. The page fault 14 occurs when a page required to execute a program does not exist in a physical memory, and the program accesses an auxiliary storage device in order to read out the corresponding page.

A time 12 required to read the corresponding page depends on the speed of the auxiliary storage device. The time 12 is several tens of milliseconds when the auxiliary storage device is a hard disk, and is about 1 millisecond when the auxiliary storage device is a NAND flash physical memory of a relatively high speed.

When the interrupt latency time is extended in millisecond units, very serious problems may occur according to the purpose of the program. Further, in the case in which a process on an important event is put off, the system may malfunction or be shut down.

### SUMMARY OF THE INVENTION

The present invention is not required to overcome the disadvantages described above, and an exemplary embodiment of the present invention may not overcome any of the problems described above.

Preferred embodiments of the present invention aim to provide an apparatus and method for handling an interrupt disabled section and page pinning apparatus and method so as to effectively apply a demand paging method to a system using an interrupt disabling/enabling method.

According to an aspect of the present invention, there is provided an apparatus for handling an interrupt disabled section, the apparatus including: a generating unit which generates a list of interrupt disabled sections, in which demand paging can occur, in order to execute a program; an examining unit which searches the generated list when the program demands to disable an interrupt and examines whether information corresponding to the interrupt disabling demand is included in the list; and a loading unit which reads out a page required to execute the program from an auxiliary storage device when the information corresponding to the interrupt disabling demand is included in the list, and loads the page into a physical memory.

According to another aspect of the present invention, there is provided a page pinning apparatus including: a determining unit which determines whether demand paging to execute a program occurs in an interrupt disabled section; and a page pinning unit which reads out a page required to execute the program from an auxiliary storage device when it is determined that the demand paging occurs in the interrupt disabled section, loads the page into a physical memory, and pins the page to the physical memory.

According to still another aspect of the present invention, there is provided a method of handling an interrupt disabled section, the method including: generating a list of interrupt disabled sections, in which demand paging can occur, in order to execute a program; searching the generated list when the program demands to disable an interrupt and examining whether information corresponding to the interrupt disabling demand is included in the list; and reading out a page required to execute the program from an auxiliary storage device when the information corresponding to the interrupt disabling demand is included in the list, and loading the page into a physical memory.

According to another aspect of the present invention, there is provided a page pinning method including: determining whether demand paging to execute a program occurs in an interrupt disabled section; and reading out a page required to execute the program from an auxiliary storage device when it is determined that the demand paging occurs in the interrupt disabled section, loading the page into a physical memory, and pinning the page to the physical memory.

Further features of the present invention are set out in the appended claims.

### BRIEF DESCRIPTION OF THE DRAWINGS

The present invention will become more apparent by describing in detail exemplary embodiments thereof with reference to the attached drawings in which:

FIGS. 1 and 2 are views illustrating the concepts of an interrupt disabled section and an interrupt latency time in the related art;

FIG. 3 is a block diagram illustrating an apparatus for handling an interrupt disabled section according to an exemplary embodiment of the invention;

FIG. 4 is a flow chart representing a method of handling an interrupt disabled section according to an exemplary embodiment of the invention;

FIG. 5 is a view illustrating a list of interrupt disabled sections required to execute a program according to an exemplary embodiment of the invention;

FIG. 6 is a flow chart representing a page pinning method according to another exemplary embodiment of the invention; and

FIG. 7 is a view illustrating the concept of page pinning according to another exemplary embodiment of the invention.

### DESCRIPTION OF THE EXEMPLARY EMBODIMENTS OF THE INVENTION

Advantages and features of the present invention and methods of accomplishing the same may be understood more readily by reference to the following detailed description of exemplary embodiments and the accompanying drawings. The present invention may, however, be exemplarily embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

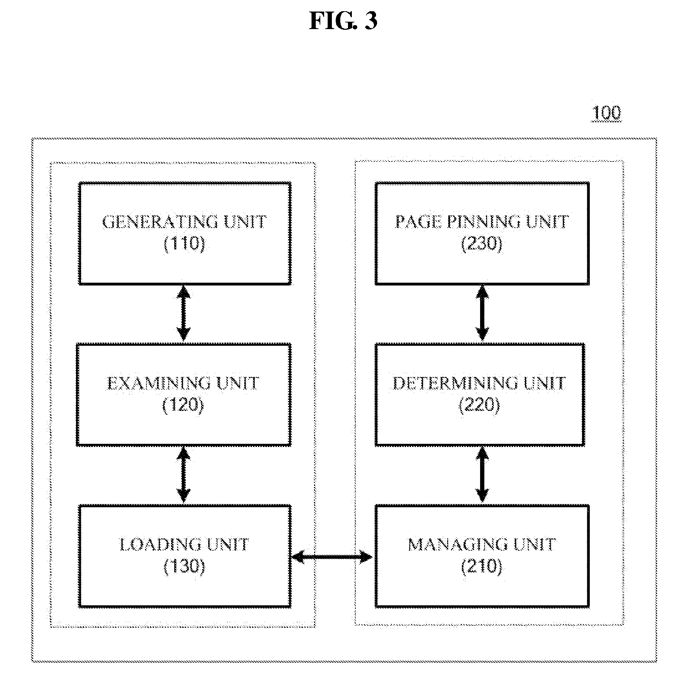

FIG. 3 is a block diagram illustrating an apparatus for handling an interrupt disabled section according to an exemplary embodiment of the invention.

An apparatus 100 for handling an interrupt disabled section includes a generating unit 110, an examining unit 120, a loading unit 130, a managing unit 210, a determining unit 220, and a page pinning unit 230. The determining unit 220 and the page pinning unit 230 may be separated from the apparatus 100 and be integrated into one device.

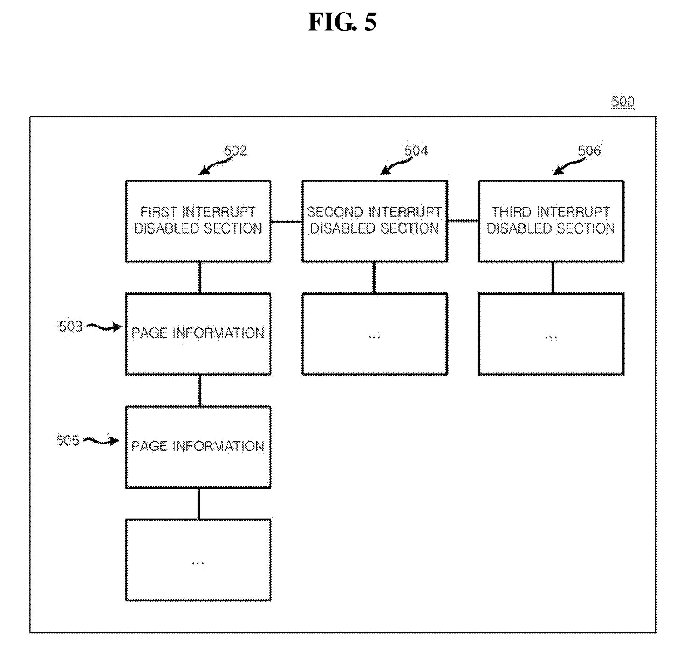

The generating unit 110 generates a list of interrupt disabled sections in which demand paging can occur to execute a program. Codes of the program may include different code areas requiring disabling an interrupt. Therefore, when a function of the program is called to perform the interrupt disabling work, an address to which the called function returns after finishing the interrupt disabling work may be different for every interrupt disabled section. The generating unit 110 may generate the list taking the return addresses as characteristic values. For this, the generating unit 110 may statically analyze the structure of the program (for example, a control flow or a data flow) or dynamically analyze the structure of the program during the execution of the program, and generate the list of the interrupt disabled sections, in which the demand paging can occur, in order to execute the program on the basis of the analyzed information. The list includes at least one of identification information on sections (interrupt disabled sections), each of which is from a time point when the interrupt is disabled to a time point immediately before the interrupt is enabled, and information on pages capable of causing the demand paging in the interrupt disabled sections. The identification information may include information on addresses to which the function called to perform the interrupt disabling work returns after finishing the interrupt disabling work. The interrupt disabled section list will be described in more detail below with reference to FIG. 5.

The examining unit 120 searches the generated list when the program demands to disable the interrupt and examines whether information corresponding to the interrupt disabling demand is included in the list.

When the information corresponding to the interrupt disabling demand is included in the list, the load unit 130 reads a page required to execute the program from an auxiliary storage device and loads the read page into a physical memory. Then, the load unit 130 determines whether to load the page according to whether an address, to which a function called when it is demanded to disable the interrupt returns after finishing the interrupt disabling work, corresponds to a return address included in the identification information. In this time, the managing unit 210, which will be described below, has not disabled the interrupt yet and thus an interrupt latency time of the system is not affected.

Thereafter, the managing unit 210 disables the interrupt after the loading of the page is completed.

Therefore, occurrence of a page fault in the interrupt disabled section can be prevented in advance.

In this case, when detection of the page is not perfect, a page fault may occur in the interrupt disabled section. In order to make up for that instance, the determining unit 220 and the page pinning unit 230 may be used.

The determining unit 220 determines whether demand paging for executing a program occurs in a state in which the interrupt is disabled.

When it is determined that the demand paging occurs in the state in which the interrupt is disabled, the page pinning unit 230 reads a page required to execute the program from an auxiliary storage device, loads the page into a physical memory, and pins the page. Pinning the page means to hold the page loaded in a storage area of the physical memory to prevent the page from escaping from the physical memory.

Therefore, it is possible to prevent the demand paging with respect to the same page from occurring two or more times in the interrupt disabled section. In the case of complementarily applying the page pinning method and the above-described method of preventing problems using the list of the interrupt disabled sections in which the demand paging occurs, it is possible to effectively prevent an interrupt latency time problem.

Each of components illustrated in FIG. 2 may be composed of a "module". The term "module" means software or a hardware component such as an FPGA (field programmable gate array) or an ASIC (application specific integrated circuit). A module has a specific function. However, a module is not limited to software or hardware. A module can be made in an addressable storage medium and can be made to reproduce at least one processor. Therefore, as an example, a module includes components such as software components, object-oriented software components, class components, and task components, processors, functions, attributes, procedures, subroutines, segments of program code, drivers, firmware, microcode, circuits, data, databases, data structures, tables, arrays, and variables. Functions provided in the components and the modules can be combined so as to be realized by a smaller number of components and modules or can be divided so as to be realized by additional components and modules.

In an exemplary embodiment of the invention, in order to solve problems occurring when the page fault occurs in the interrupt disabled section in the related art, two approaches are proposed. One of the two approaches is a method of preventing a page fault from occurring in the interrupt disabled section and the other approach is a method of preventing, when a page fault occurs in the interrupt disabled section, additional page fault occurrences. Those methods will be described in detail using the following exemplary embodiments.

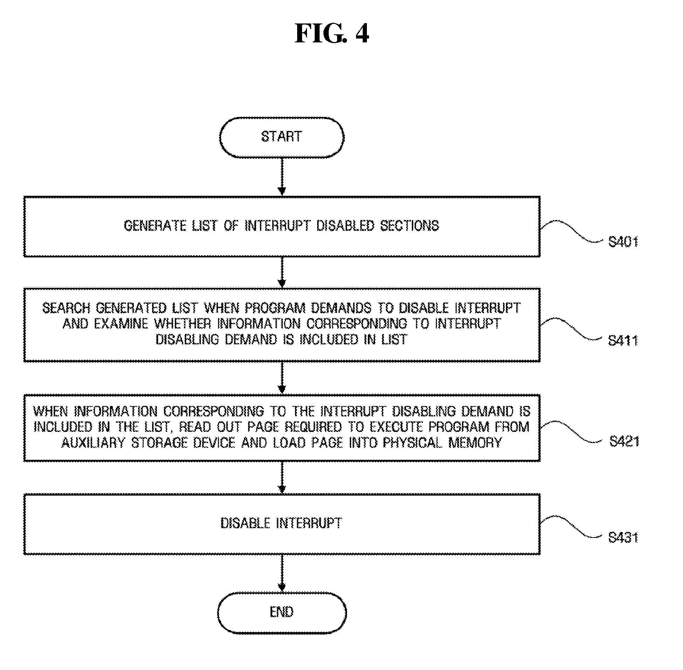

FIG. 4 is a flow chart representing a method of handling an interrupt disabled section according to an exemplary embodiment of the invention.

In the related art, when the page required for the program does not exist in the physical memory, work to load the corresponding page from the auxiliary storage device into the physical memory is performed. In this case, when the interrupt is disabled at the time point when the demand paging occurs, a time for which the interrupt is disable, that is, an interrupt latency time increases.

However, in this exemplary embodiment, before disabling the interrupt, the page required for executing the program in the interrupt disabled section is loaded into the physical memory. Therefore, it is possible to prevent the page fault from occurring in the interrupt disabled section. For this, the list of the interrupt disabled sections in which the demand paging occurs and information on pages required in the individual sections should be known.

First, the generating unit 110 generates the list of the interrupt disabled sections, in which the demand paging occurs, to execute the program (S401).

Next, the examining unit 120 searches the generated list when the program demands to disable the interrupt and examines whether information corresponding to the interrupt disabling demand is included in the list (S411).

When the information corresponding to the interrupt disabling demand is included in the list, the load unit 130 reads the page required to execute the program from the auxiliary storage device and loads the read page into the physical memory (S421).

More specifically, as illustrated in FIG. 5, the list 500 may include identification information on a plurality of interrupt disabled sections 502, 504, and 506 and information on pages 503 and 505 capable of causing the demand paging in each of the interrupt disabled sections 502, 504, and 506. The identification information may include information on addresses to which the function called to perform the interrupt disabling work returns after finishing the interrupt disabling work. The examining unit 120 searches the list 500 and examines whether information corresponding to the interrupt disabling demand is included in the interrupt disabled section in which the demand paging can occur. Then, when the information corresponding to the interrupt disabling demand is included in the interrupt disabled section, the loading unit 130 reads out the page required to execute the program from the auxiliary storage device and loads the read page into the physical memory. In this time, the managing unit 210 has not disabled the interrupt yet and thus the interrupt latency time of the system is not affected.

Next, the managing unit 210 disables the interrupt after the loading of the page is completed (S431).

Therefore, the pages causing the demand paging in the interrupt disabled section are loaded into the physical memory in advance, and thus it is possible to solve the problems occurring when the page fault occurs in the interrupt disabled section in the related art.

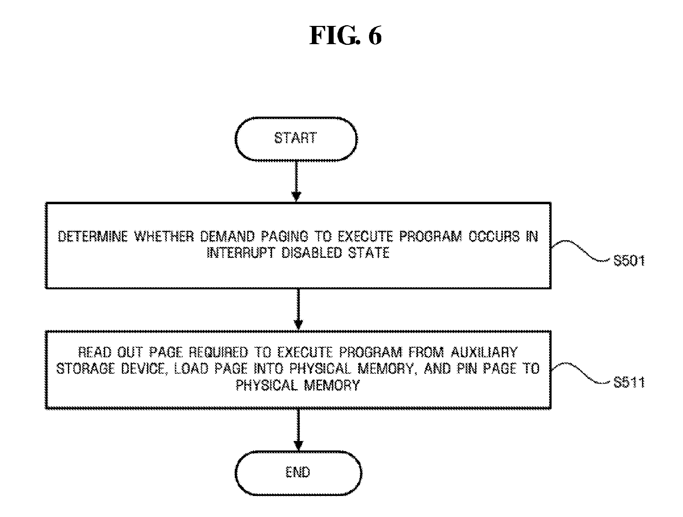

When detection of the page is not perfect, a page fault may occur in the interrupt disabled section. In order to account for that situation, a page pinning method, which will be described below with reference to FIG. 6, may be used.

FIG. 6 is a flow chart representing a page pinning method according to another exemplary embodiment.

The page fault may occur when the page required to execute the program does not exist in the physical memory. In general, when the capacity of the physical memory used is smaller than a virtual memory intended to be used, the page fault may easily occur. Also, it may be difficult to perfectly make the list of the interrupt disabled sections, in which the demand paging can occur, in advance.

Therefore, in this exemplary embodiment, when the page fault occurs in the interrupt disabled section, in order to prevent any more page fault from occurring, the page pinning method may be used.

The determining unit 220 determines whether the demand paging to execute the program occurs in the interrupt disabled section (S501).

When it is determined that the demand paging occurs in the interrupt disabled section, the page pinning unit 230 reads out the page required to execute the program from the auxiliary storage device, loads the read page into the physical memory, and pins the page to the physical memory (S521).

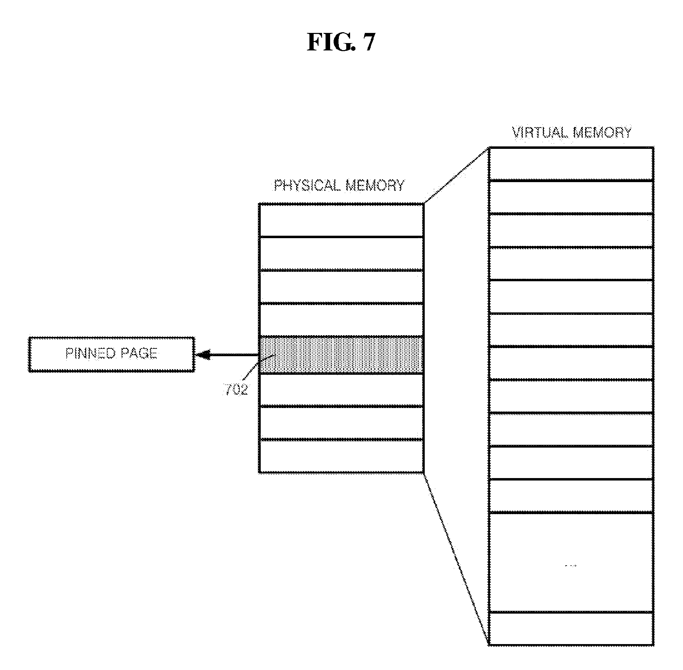

At this time, as illustrated in Fig. 7, a buffer may be used as a storage area 702 of the physical memory in which the page is stored, and the corresponding page is held in a buffer allocated as the storage area 702 until a specific command is issued. Then, without accessing the virtual memory, it is possible to use the page stored in the buffer to load the page required to execute the program.

Therefore, it is possible to prevent the same problems from being repeated. In the case of complementarily applying the page pinning method and the above-described method of preventing problems using the list of the interrupt disabled sections in which the demand paging occurs, it is possible to effectively prevent an interrupt latency time problem.

Although the present invention has been described in connection with the exemplary embodiments of the present invention, it will be apparent to those skilled in the art that various modifications and changes may be made thereto without departing from the scope and spirit of the invention. Therefore, it should be understood that the above exemplary embodiments are not limitative, but illustrative in all aspects.

As described in the exemplary embodiments above, it is possible to effectively apply the demand paging to the RTOS-based system using the interrupt disabling/enabling method and thus to reduce the capacity of the memory required to operate the system. That is, it is possible to save a RAM of a product and thus to reduce the product price.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus (100) for handling an interrupt disabled section, the apparatus comprising:
a generating unit (110) which generates a list of interrupt disabled sections, in which a demand paging can occur, in order to execute a program;
an examining unit (120) which searches the generated list when the program demands to disable an interrupt and examines whether information corresponding to the interrupt disabling demand is included in the list; and
a loading unit (130) which reads out a page required to execute the program from an auxiliary storage device when the information corresponding to the interrupt disabling demand is included in the list, and loads the page into a physical memory.

2. The apparatus (100) of claim 1, further comprising a managing unit (210) which disables the interrupt after the loading of the page is completed.

3. The apparatus (100) of claim 2, further comprising a determining unit (220) which determines whether the demand paging to execute the program occurs while the interrupt is disabled.

4. The apparatus (100) of claim 3, further comprising a page pinning unit (230) which reads the page required to execute the program from the auxiliary storage device and pins the page to the physical memory when it is determined that the demand paging occurs while the interrupt is disabled.

5. The apparatus (100) of claim 4, wherein the determining unit (220) and the page pinning unit (230) are integrated into a single body which is separate from the generating unit (110), examining unit (120), loading unit (130) and managing unit (210).

6. The apparatus (100) of any preceding claim, wherein the list comprises at least one of identification information on the interrupt disabled sections and information on pages capable of causing the demand paging.

7. The apparatus (100) of claim 6, wherein the identification information further comprises information regarding an address to which a function called to perform interrupt disabling work returns after finishing the interrupt disabling work.

8. The apparatus (100) of claim 7, wherein the loading unit (130) determines whether to load the page according to whether the address to which the function called when it is demanded to disable the interrupt returns after finishing the interrupt disabling work corresponds to a return address included in the identification information.

9. A page pinning apparatus comprising:
a determining unit (220) which determines whether demand paging to execute a program occurs during an interrupt disabled section; and
a page pinning unit (230) which reads out a page required to execute the program from an auxiliary storage device when it is determined that the demand paging occurs in the interrupt disabled section, loads the page into a physical memory, and pins the page to the physical memory.

10. The apparatus of claim 9, wherein:
after loading the page, the program reads out the page required to execute the program from the physical memory and uses the page, and
information regarding the loaded page is held in the physical memory until a specific command is issued.

11. A method of handling an interrupt disabled section, the method comprising:
generating a list of interrupt disabled sections, in which demand paging can occur, in order to execute a program;
searching the generated list when the program demands to disable an interrupt and examining whether information corresponding to the interrupt disabling demand is included in the list; and
reading out a page required to execute the program from an auxiliary storage device when the information corresponding to the interrupt disabling demand is included in the list, and
loading the page into a physical memory.

12. The method of claim 11, further comprising:
disabling the interrupt after the loading of the page is completed.

13. The method of claim 11 or claim 12, wherein the list comprises at least one of identification information on the interrupt disabled sections and information on pages capable of causing the demand paging.

14. The method of claim 13, wherein the identification information further comprises information on an address to which a function called to perform interrupt disabling work returns after finishing the interrupt disabling work.

15. The method of claim 14, wherein the loading of the page comprises determining whether to load the page according to whether the address to which the function called when it is demanded to disable the interrupt returns after finishing the interrupt disabling work corresponds to a return address included in the identification information.

16. A page pinning method comprising:
determining whether demand paging to execute a program occurs in an interrupt disabled section; and
reading out a page required to execute the program from an auxiliary storage device when it is determined that the demand paging occurs in the interrupt disabled section,
loading the page into a physical memory, and
pinning the page to the physical memory.

17. The page pinning method of claim 16, wherein:
after loading the page, the program reads out the page required to execute the program from the physical memory and uses the page, and
information of the loaded page is held in the physical memory until a specific command is issued.
